# EUROPÄISCHE PATENTSCHRIFT

(11) **EP 0 622 142 B1**
(45) Veröffentlichungstag und Bekanntmachung des Hinweises auf die Patenterteilung: **15.01.1997**
(21) Anmeldenummer: 94102629.6
(22) Anmeldetag: 22.02.1994
(51) Int. Cl.: B23B 31/08

(54) **Werkzeughalter, insbesondere Schnellwechselfutter**
Tool holder, particularly quick release chuck
Porte outil, en particulier mandrin à changement rapide

(30) Priorität: 30.04.1993 DE 4314235
(43) Veröffentlichungstag der Anmeldung: 02.11.1994
(60) Teilanmeldung: 96106069.6
(73) Patentinhaber: OTTO BILZ, Werkzeugfabrik GmbH & Co., 73760 Ostfildern 2 (DE)
(72) Erfinder: Bäder, Siegfried, D-73257 Köngen (DE); Höfle, Lothar, D-73760 Ostfildern 2 (DE); Babel, Gerhard, D-73666 Baltmannsweiler (DE)
(74) Vertreter: Kratzsch, Volkhard, Dipl.-Ing.

(56) Entgegenhaltungen:
- EP-A- 0 464 335
- DE-A- 3 902 559
- US-A- 4 752 088

## Beschreibung

Die Erfindung bezieht sich auf einen Werkzeughalter, insbesondere Schnellwechselfutter, der im Oberbegriff des Anspruchs 1 genannten Art.

Bei einem bekannten Werkzeughalter dieser Art (US-A-47 52 088) ist der mindestens eine Mitnahmekörper in Form einer Kugel von einem Ringteil umgeben, das den Kopf auf dessen Außenseite im Bereich des Mitnahmekörpers zumindest teilweise umfaßt und außen an dem vorstehenden Teil des Mitnahmekörpers anliegen kann. Der Ringteil ist eine Abdeckung, die entfernbar oder verschiebbar sein soll und einen Zugang zum Mitnahmekörper und zum letzteren enthaltenden Schlitz ermöglichen soll. Der Ringteil bewirkt keinen Spannzustand, da er weder elastisch ist noch als Spannglied wirksam sein soll noch irgendeine andere Kraft von außen nach innen erzeugen soll.

Es ist ferner ein Werkzeughalter bekannt (DE-A-39 02 559), bei dem der mindestens eine Mitnahmekörper in einer Kugelführungshülse angeordnet und in Längsrichtung in seiner Position geführt ist, wobei diese Kugelführungshülse in einem präzise darauf abgestimmten Ringraum zwischen dem Kopf der Aufnahme einerseits und dem Gehäuse andererseits aufgenommen und geführt ist, so daß bei einer Relativbewegung zwischen dem Kopf und dem Gehäuse die Kugelführungshülse mit ihren Kugeln entlang den Kontaktflächen des Kopfes und des Gehäuses abrollen kann und dadurch der mindestens eine Mitnahmekörper, insbesondere eine Mitnahmekugel, bei dieser Relativverschiebung jeweils in Position gehalten ist und zwischen beiden abrollen kann. Eine derartige Kugelführungshülse stellt ein relativ kostenaufwendiges Bauteil dar. Nachteilig ist außerdem, daß die Außenfläche des Gehäuses und die letztere mit Abstand umgebende Innenfläche des Kopfes der Aufnahme, auf denen die Kugeln der Kugelführungshülse abrollen, sehr präzis hergestellt und aufeinander abgestimmt werden müssen. Dies bedingt eine kostenaufwendige Bearbeitung. Es hat sich im übrigen gezeigt, daß Schmutz, der in den Ringraum eindringen und die Kugelführungshülse beaufschlagen kann, dann relativ schnell zu Schwergängigkeit oder gar völligem Klemmen im Bereich der Kugelführungshülse zwischen dem Kopf der Aufnahme einerseits und dem Gehäuse andererseits führen kann. Die Kugelführungshülse und die dadurch bedingte Konzeption ist somit nicht immer störungsfrei sondern deren Funktion verschmutzungsanfällig.

Der Erfindung liegt die Aufgabe zugrunde, einen Werkzeughalter, insbesondere ein Schnellwechselfutter, der im Oberbegriff des Anspruchs 1 genannten Art zu schaffen, das diese Nachteile beseitigt, insbesondere einfacher, kostengünstiger, kompakter und weniger störanfällig und verschmutzungsanfällig ist.

Die Aufgabe ist bei einem Werkzeughalter, insbesondere Schnellwechselfutter, der im Oberbegriff des Anspruchs 1 genannten Art gemäß der Erfindung durch die Merkmale im Kennzeichnungsteil des Anspruchs 1 gelöst. Auf diese Weise ist eine Kugelführungshülse für die Inpositionhaltung des mindestens einen Mitnahmekörpers, insbesondere einer Mitnahmekugel, entbehrlich. Dieses Teil entfällt gänzlich, so daß dadurch eine Kostenersparnis und eine Reduzierung der Bauteile erreicht ist. Auch sind nunmehr keine Führungsflächen, die sonst für die Führung der Kugelführungshülse dienen, besonders präzis zu bearbeiten. Die betreffende Außenfläche des Gehäuses und Innenfläche des Kopfes der Aufnahme müssen auch nicht präzis unter Einhaltung einer genauen Passung aufeinander abgestimmt werden. Dadurch sind die Fertigungskosten und auch der Aufwand für den Zusammenbau erheblich reduziert. Der Werkzeughalter ist daher erheblich kompakter, einfacher, auch leichter, und insgesamt erheblich kostengünstiger. Zwischen den Kopf der Aufnahme und das Gehäuse eindringender Schmutz beeinträchtigt die gute Funktionsweise nicht. Der Werkzeughalter ist somit auch auf Dauer funktionssicher und hinsichtlich seiner Betriebsbereitschaft und Funktionstüchtigkeit nicht mehr durch eindringenden Schmutz beeinträchtigbar. Insgesamt sind somit die eingangs herausgestellten Nachteile beseitigt. Der Werkzeughalter gemäß der Erfindung ist somit auch betriebssicherer und auch montage freundlicher. Die Erfindung macht sich die Erkenntnis zu Nutze, daß der mindestens eine Mitnahmekörper, z.B. mindestens eine Mitnahmekugel, dadurch in Längsrichtung zwischen dem Kopf und dem Gehäuse in Position gehalten wird, daß der Mitnahmekörper mittels eines elastischen Spanngliedes von außen nach innen mit einer Andrückkraft beaufschlagt wird, die den Mitnahmekörper gegen die Längsnut im Gehäuse drückt und in Position hält.

Weitere vorteilhafte Erfindungsmerkmale und Ausgestaltungen ergeben sich aus den Ansprüchen 2 bis 10. Dadurch wird der Werkzeughalter noch weiter vereinfacht. Ferner wird erreicht, daß sowohl bei Rechtslauf als auch bei Linkslauf die auf die zugeordneten Mitnahmekörper drückenden Flanken der Längsnut des Kopfes die zugeordneten Mitnahmekörper eher nach innen und in die Längsnut des Gehäuses hineindrücken als ein Auswandern nach außen zuzulassen. Dadurch ist sichergestellt, daß das elastische Spannglied, insbesondere das elastische Umfangsspannglied, nicht etwa über die Mitnahmekörper von innen nach außen mit einer Kraft beaufschlagt wird. Vielmehr bleibt das Umfangsspannglied kräftefrei, so daß es ringsum bei allen Mitnahmekörpern die von außen nach innen gerichtete Andrückkraft ausüben kann. Durch die beschriebene Anordnung der Längsnuten im Kopf und der Ausrichtung der Flanken der Längsnuten ist gezielt sowohl bei Rechtslauf als auch bei Linkslauf eine Kraftbeaufschlagung der Mitnahmekörper, insbesondere Mitnahmekugeln, dergestalt erzielt, daß die Mitnahmekörper nach innen und fest in die gehäuseseitige Längsnut hineingedrückt werden, so daß jegliches Auswandern nach außen und Beaufschlagen des Umfangsspanngliedes völlig ausgeschlossen ist. Dies ist mit einfachen Mitteln ohne zusätzliche Bauteile allein durch die beschriebene, geschickte Anordnung und Ausbildung der Längsnuten in der Aufnahme erreicht. Dadurch kann das Umfangsspannglied sehr querschnittsdünn gehalten werden, so daß dadurch eine große Elastizität und Kraftentwicklung auf die Mitnahmekörper erzielbar ist. Außerdem wird der radiale Bauraum reduziert, so daß der Durchmesser des Werkzeughalters so klein wie möglich gehalten werden kann.

Eine weitere vorteilhafte Ausgestaltung ergibt sich ferner aus dem nebengeordneten Anspruch 11. Vorteilhafte Weiterbildungen dazu enthalten die Ansprüche 12 bis 14. Die so gestaltete Längenausgleichseinrichtung ist außerordentlich einfach. Sie besteht aus nur wenigen Bauteilen. Sie hat den Vorteil, daß mit einer einzigen Feder ein Längenausgleich auf Zug und auf Druck erreichbar ist und außerdem die Längenausgleichseinrichtung zugleich als Anschnittdruckverstärker wirksam ist. Diese Gestaltung ist besonders einfach. Von Vorteil ist dabei ferner, daß durch die Anordnung der Längenausgleichseinrichtung auf der Außenseite des Kopfes, insbesondere des Umfangsspanngliedes, das Innere des Kopfes und des Gehäuses damit nicht ausgefüllt ist und somit frei für andere Komponenten ist. Außerdem ist eine kürzere axiale Bauweise und ein kleinerer Außendurchmesser möglich, so daß das Schnellwechselfutter noch kompakter gestaltet werden kann.

Weitere Einzelheiten und Vorteile der Erfindung ergeben sich aus der nachfolgenden Beschreibung.

Die Erfindung ist nachfolgend anhand eines in den Zeichnungen gezeigten Ausführungsbeispieles näher erläutert. Es zeigen:
- Fig. 1: einen schematischen axialen Längsschnitt eines Werkzeughalters,
- Fig. 2: einen schematischen Schnitt entlang der Linie II-II in Fig. 1.

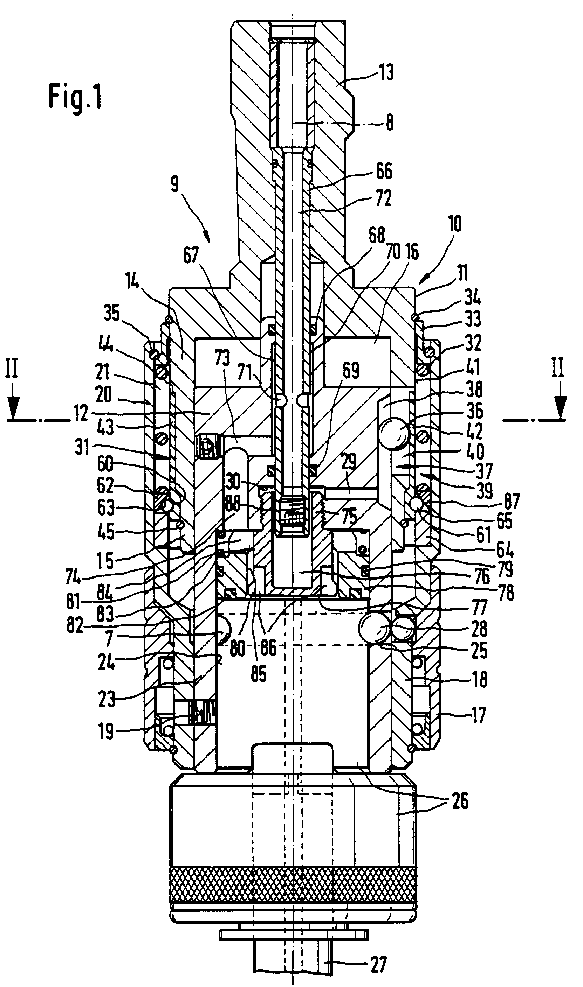

Der in den Zeichnungen gezeigte Werkzeughalter 9 besteht insbesondere aus einem Schnellwechselfutter 10, vorzugsweise zum Geindeschneiden, Gewindeformen od.dgl.. Das Schnellwechselfutter 10 weist eine Aufnahme 11 und ein Gehäuse 12 auf. Die Aufnahme 11 ist am in Fig. 1 oberen Ende 13 zum Einsetzen in eine nicht gezeigte Maschinenspindel, Werkzeugaufnahme od. dgl. einer Werkzeugmaschine eingerichtet, wobei dieses Ende 13 z. B. als Schaft ausgebildet ist, der unmittelbar oder unter Zwischenfügung eines Anpassungselements in der nicht gezeigten Maschinenspindel, Werkzeugaufnahme od. dgl. aufnehmbar und mit dieser zur Drehmitnahme koppelbar ist.

Am gegenüberliegenden, in Fig. 1 unten befindlichen Ende weist die Aufnahme 11 einen Kopf 14 auf, der mit einer Zylinderwandung 15 versehen ist, innerhalb der eine koaxiale zylindrische Öffnung 16 enthalten ist, die in Fig. 1 nach unten hin offen ist. In dieser Öffnung 16 ist das Gehäuse 12 undrehbar, jedoch in axialer Längsrichtung entsprechend der Längsmittelachse 8 relativverschiebbar, aufgenommen und geführt.

Das Gehäuse 12 ist etwa umgekehrt topfförmig gestaltet und weist im unteren Teil eine Zylinderwandung 23 auf, die eine koaxiale zylindrische und in Fig. 1 nach unten offene Öffnung 24 umschließt, in die ein nur angedeuteter üblicher Schnellwechseleinsatz 26 einsetzbar und damit axial und drehmomentübertragend kuppelbar ist. Der Schnellwechseleinsatz 26 trägt ein Werkzeug 27, das z.B. zum Gewindeschneiden, Gewindeformen od.dgl. geeignet ist. Die axiale formschlüssige Arretierung und Drehmitnahme des eingesetzten Schnellwechseleinsatzes 26 erfolgt in üblicher Weise (DE-OS 39 02 559) über mindestens eine Haltekugel 28, die in einer Radialöffnung 25 der Zylinderwandung 23 des Gehäuses 12 gehalten ist. Die Haltekugel 28 greift formschlüssig in eine äußere Ringnut 7 des Schnellwechseleinsatzes 26 ein. Es können auch mehrere, in Umfangsrichtung in Abständen angeordnete Haltekugeln 28 vorgesehen sein.

Die Haltekugel 28 wird mittels einer äußeren Betätigungshülse 17 betätigt, die eine Außenhülse 18 umgibt und relativ dazu in Axialrichtung verschiebbar ist. Die Außenhülse 18 umgreift die Zylinderwandung 23 und ist auf dieser fest aufgesetzt und mittels z.B. einer Gewindeschraube 19 fest verbunden. In Fig. 1 nach oben hin erweitert sich der Innendurchmesser der Außenhülse 18 derart, daß diese mit einem oberen zylindrischen Hals 20 die Zylinderwandung 15 des Kopfes 14 unter Bildung eines Ringraumes 21 dazwischen umschließt. In diesem Ringraum 21 ist eine axiale Längenausgleichseinrichtung 31 enthalten, die axial zwischen dem Gehäuse 12 und der Aufnahme 11 wirksam ist und einen axialen Längenausgleich bei einer Relativverschiebung in beiden Achsrichtungen, somit auf Zug und auf Druck, ermöglicht. Zugleich ist die Längenausgleichseinrichtung 31 als Anschnittdruckverstärker bei Druck in Axialrichtung gemäß Fig. 1 von oben nach unten wirksam. Die Längenausgleichseinrichtung 31 enthält im Ringraum 21 eine einzige Druckfeder 32 für den Längenausgleich in der einen bzw. in der anderen Achsrichtung. Die Druckfeder 32 ist mit dem oberen Ende an einem Ring 33 abgestützt, der über einen Sprengring 34 an der Aufnahme 11 gegen Verschiebung in Fig. 1 nach oben gesichert ist. Über einen Sprengring 35 auf der Innenseite des Halses 20 kann bei Relativverschiebung des Gehäuses 12 in Fig. 1 nach unten der Ring 32 ebenfalls nach unten verschoben werden. Bei einer Relativverschiebung des Gehäuses 12 mit der Außenhülse 18 in Fig. 1 nach oben bleibt der Ring 33 als Widerlager für die Druckfeder 32 stehen. Dies ist dann der Fall, wenn z.B. beim Bohren ein Axialdruck von der Maschinenspindel über die Aufnahme 11 her auf das Werkzeug 27 wirkt und dieser nach Ansprechen des Anschnittdruckverstärkers von der Druckfeder 32 aufgenommen wird, da hierbei die Aufnahme 11 mit dem Ring 33 relativ zum Gehäuse 12 in Fig. 1 nach unten bewegt wird unter Zusammendrücken der Druckfeder 32.

Der Kopf 14 ist mit dem Gehäuse 12 in Axialrichtung und Umfangsrichtung über zumindest einen Mitnahmekörper 36 gekuppelt, der zwischen dem Kopf 14 und dem Gehäuse 12 angeordnet ist. Dabei ist der mindestens eine Mitnahmekörper 36 teilweise in einer zugeordneten Längsnut 37 des Kopfes 14 und teilweise in einer zugeordneten Längsnut 38 des Gehäuses 12 gehalten, so daß darüber die Drehmomentübertragung erfolgen kann und der Mitnahmekörper 36 bei der Relativverschiebung zwischen dem Kopf 14 und dem Gehäuse 12 abrollen kann, so daß sich eine leichtgängige Relativverschiebung ergibt.

Eine der wesentlichen Besonderheiten liegt darin, daß der mindestens eine Mitnahmekörper 36 zwischen dem Kopf 14 und dem Gehäuse 12 hinsichtlich seiner Position in Längsrichtung, also in Richtung etwa parallel zur Längsmittelachse 8, führungsfrei angeordnet ist und mittels eines elastischen Spanngliedes 39 von außen nach innen mit einer Andrückkraft beaufschlagt ist, die den mindestens einen Mitnahmekörper 36 in dieser genannten Position hält, d.h. verhindert, daß der Mitnahmekörper 36 in Fig. 1 in den Längsnuten 37, 38 nach unten herabfällt und dann bei der Relativverschiebung zwischen dem Kopf 14 und dem Gehäuse 12 nicht mehr abrollen kann. Hierdurch ist im Vergleich zu bekannten Werkzeughaltern eine erhebliche Vereinfachung erzielt, da auf diese Weise eine sonst notwendige und eingesetzte Kugelführungshülse, in der der mindestens eine Mitnahmekörper 36 in Position gehalten ist, entbehrlich ist. Derartige Kugelführungshülsen sind nicht nur selbst kostenaufwendig, sondern sie bedingen am Kopf 14 und am Gehäuse 12 entsprechend genau gearbeitete Führungsflächen für die Kugeln der Kugelführungshülse. Diese besondere Bearbeitung ist ebenfalls kostenaufwendig. Außerdem bedingen Kugelführungshülsen einen größeren Durchmesser des Werkzeughalters. Schließlich hat sich gezeigt, daß Verunreinigungen in den Bereich einer Kugelführungshülse gelangen können, die dann in relativ kurzer Zeit ein Verklemmen zur Folge haben können. Auch diese Probleme sind bei der genannten Gestaltung, die eine Kugelführungshülse entbehrlich macht, beseitigt.

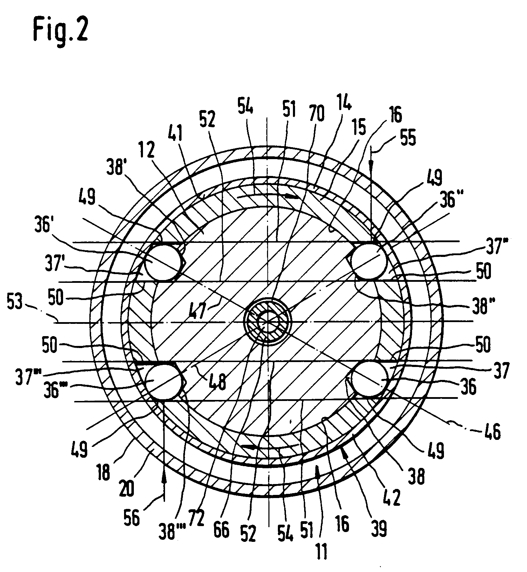

Wie sich aus Fig. 1 und 2 ergibt, ist die je Mitnahmekörper 36 vorgesehene Längsnut 37 im Kopf 14 als in Querrichtung durchgängiger Längsschlitz 40 innerhalb der Zylinderwandung 15 des Kopfes 14 ausgebildet. Der mindestens eine Mitnahmekörper 36 greift in Querrichtung durch den zugeordneten Längsschlitz 40 im Kopf 14 hindurch und steht zumindest geringfügig über die Außenseite 41 des Kopfes 40 im Bereich dieses Längsschlitzes 40 vor.

Das elastische Spannglied 39 besteht in besonders vorteilhafter, einfacher Weise aus einem Umfangsspannglied 42, das den Kopf 14 auf dessen Außenseite 41 im Bereich des mindestens einen Mitnahmekörpers 36 zumindest teilweise umfaßt und außen an dem vorstehenden Teil des mindestens einen Mitnahmekörpers 36 angreift und dort die von außen nach innen gerichtete Andrückkraft entfaltet. Das Umfangsspannglied 42 ist aus einem elastisch federnden Ringteil, z.B. einem Ring oder einer Zylinderhülse, insbesondere aus Metall, gebildet. Es ist in axialer Längsrichtung am Kopf 14, insbesondere auf dessen Außenseite 41, festgelegt. In der Außenseite 41 ist hierzu eine Ringaufnahme 43 mit oberer Axialschulter 44 enthalten, an der das Umfangsspannglied 42 in Achsrichtung gemäß Fig. 1 nach oben axial fixiert ist. Die Fixierung auf der gegenüberliegenden Seite, in Fig. 1 nach unten, geschieht mittels eines Sprengringes 45 an der Zylinderwandung 15 des Kopfes 14.

Wie sich aus Fig. 2 ergibt, ist das Umfangsspannglied 42 ein geschlossener Ringteil. Bei einem anderen, nicht gezeigten Ausführungsbeispiel kann das Umfangsspannglied 42 statt dessen auch in axialer Längsrichtung an einer Stelle unterbrochen, z.B. geschlitzt,sein.

Nachfolgend sind weitere wesentliche Besonderheiten der Längsnuten 37, 38 für den mindestens einen Mitnahmekörper 36, die ein Längsnutpaar bilden, anhand von Fig. 2 erläutert.

Die mindestens eine Längsnut 38 des Gehäuses 12 weist einen Trapezquerschnitt auf, der symmetrisch ist. Die Symmetrielinie 46 verläuft innerhalb einer Diametralebene 47 und geht somit durch die Mitte des Gehäuses 12 hindurch. Ersichtlich ist innerhalb dieser Diametralebene 47 ein weiteres gleichartiges Längsnutpaar 37', 38' mit zugeordnetem Mitnahmekörper 36' vorgesehen, das dem Längsnutpaar 37, 38 mit Mitnahmekörper 36 diametral gegenüberliegt. In analoger Weise sind im Bereich einer anderen Diametralebene 48 noch einmal zwei einander diametral gegenüberliegende Längsnutpaare 37'', 38'' mit zugeordnetem Mitnahmekörper 36'' bzw. 37''', 38''' mit zugeordnetem Mitnahmekörper 36''' vorhanden. Somit sind insgesamt vier über den Umfang verteilte Längsnuten 37, 37', 37'', 37''' im Kopf 14 vorgesehen und ferner in zugeordneter Weise vier über den Umfang verteilte Längsnuten 38, 38', 38'', 38''' im Gehäuse 12 , wobei je Längsnutpaar ein Mitnahmekörper 36 bzw. 36' bzw. 36'' bzw. 36''' vorhanden ist. Von besonderer Bedeutung ist dabei, daß die beiden Diametralebenen 47 und 48 unter einem Winkel von etwa 60° und einem Komplementärwinkel von etwa 120° zueinander verlaufen. Dies bedeutet, daß z.B. die beiden Längsnutpaare 37, 38 und 37'', 38'' (Fig. 2, rechts) auf einem Umfangsbereich liegen und dabei einen Umfangswinkelabstand von etwa 60° voneinander haben. Dies bedeutet ferner, daß auf der gegenüberliegenden Seite, in Fig. 2 links, zwei Längsnutpaare 37', 38' und 37''', 38''' auf dem dortigen Umfangsbereich und gegenüber den erstgenannten Längsnutpaaren in Umfangsrichtung versetzt angeordnet sind und auch dort einen Umfangswinkelabstand von etwa 60° voneinander haben. Zwischen zwei derart beabstandeten Längsnutpaaren befindet sich ein längsnutfreier Umfangsbereich von etwa 120° Umfangswinkel. Dieser letztgenannte längsnutfreie Umfangsbereich ist z.B. vorgesehen zwischen den beiden Längsnutpaaren 37', 38' und 37'', 38'' oder auf der gegenüberliegenden Seite zwischen den beiden Längsnutpaaren 37, 38 und 37''', 38'''.

Die Längsnut 37 und die drei übrigen gleichartigen Längsnuten 37', 37'', 37''' des Kopfes 14 sind allesamt gleich gestaltet. Sie weisen zwei einander gegenüberliegende und zueinander parallele Flanken 49, 50 auf, die jeweils innerhalb der Ebene einer Sekante 51 bzw. 52 verlaufen, welche in Radialabstand von der Längsmittelachse 8 und somit der Mitte des Werkzeughalters 9 und somit etwa parallel zu einer durch die Mitte hindurchführenden Diametralebene 53 verlaufen.

Der mindestens eine Mitnahmekörper 36 je Längsnutpaar besteht mit Vorteil aus einer Mitnahmekugel. Der Abstand zwischen den beiden Flanken 49, 50 der jeweiligen Längsnut 37, 37', 37'', 37''' des Kopfes 14 entspricht etwa dem Durchmesser dieser Mitnahmekugel oder ist zumindest geringfügig größer bemessen als dieser Durchmesser.

Diese beschriebene Gestaltung macht den Werkzeughalter 9 besonders einfach und verleiht diesem die gleichen Vorteile sowohl bei Rechtslauf gemäß Pfeil 54 als auch bei gegensinnig dazu gerichtetem Linkslauf. Wird der Kopf 14 von der nicht gezeigten Maschinenspindel her im Uhrzeigersinn gemäß Fig. 2 und Pfeil 54, also im Rechtslauf, angetrieben, so sind hinsichtlich der Drehmomentübertragung auf das Gehäuse 12 das Längsnutpaar 37'', 38'' mit Mitnahmekörper 36'', insbesondere Mitnahmekugel, und auf der Diametralebene 48 diametral gegenüberliegend das andere Längsnutpaar 37''', 38''' mit Mitnahmekörper 36''', insbesondere Mitnahmekugel, wirksam. Dabei drückt die jeweilige Flanke 49 der Längsnut 37'' und der Längsnut 37''' gegen den Mitnahmekörper 36'' bzw. 36''', wobei die Kraft an der Stelle und gemäß angedeutetem Pfeil 55 bzw. 56 wirksam ist, die im wesentlichen genau durch den Mittelpunkt der Mitnahmekugel geht und rechtwinklig zur Flanke 49 gerichtet ist.

Da die Kraftrichtung gemäß den Pfeilen 55, 56 im wesentlichen rechtwinklig zur jeweiligen Ebene der Sekante 51 und mit Abstand außerhalb der Längsnut 38'', 38''' im Gehäuse 12 verläuft, wird unter der Wirkung dieser jeweiligen Kraft der Mitnahmekörper 36'', 36''', insbesondere die Mitnahmekugel, so belastet, daß diese eher nach innen gedrückt wird, auf keinen Fall unter dieser Beaufschlagung nach außen wandern und dabei etwa das elastische Umfangsspannglied 42 belasten kann. Die Mitnahmekörper 36'', 36''' belasten somit bei diesem Rechtslauf und den wirkenden Kräften in Richtung der Pfeile 55, 56 das Umfangsspannglied 42 nicht, das somit sehr dünn und elastisch ausgebildet sein kann. Im einfachsten Fall reicht eine dünne metallische Zylinderhülse, die mit geringer Vorspannung außen auf die Zylinderwandung 15 des Kopfes derart aufgezogen ist, daß sie die geringfügig nach außen überstehenden Mitnahmekörper 36, 36', 36'', 36''' spannend umfassen und mit der von außen nach innen gerichteten elastischen Kraft beaufschlagen kann.

Wird die Aufnahme 11 im Linkslauf und somit gegensinnig zu den Pfeilen 54 und im Gegenuhrzeigersinn gemäß Fig. 2 angetrieben, so werden die Mitnahmekörper 36, 36' auf der Diametralebene 47 von den Flanken 49 der Längsnuten 37, 37' beaufschlagt, wobei ebenfalls auf die Mitnahmekörper 36, 36' Kräfte wirken, die etwa rechtwinklig zu dieser Flanke 49 und zur Ebene der Sekante 51 gerichtet sind und etwa durch die Mitte des Mitnahmekörpers 36, 36',insbesondere der Mitnahmekugel, gehen und dabei-bezogen auf die Längsnut 38, 38' derart außen wirksam sind, daß der jeweilige Mitnahmekörper 36, 36' dadurch eher nach innen gezwungen wird und auf jeden Fall an einer Bewegung nach außen und einer Kräftebeaufschlagung des Umfangsspanngliedes 42 gehindert ist. Dadurch können die einzelnen Mitnahmekörper 36, 36', 36'', 36''', insbesondere Mitnahmekugeln, in einfacher Weise zwischen dem Kopf 14 und dem Gehäuse 12 hinsichtlich der Position in Längsrichtung führungsfrei angeordnet werden und über das Umfangsspannglied 42, z.B. in Form einer dünnen metallischen Zylinderhülse, von außen nach innen mit einer Andrückkraft beaufschlagt werden, die ausreicht, die jeweiligen Mitnahmekörper im zugeordneten Längsnutpaar in Position zu halten.

Die eingangs erläuterte Längenausgleichseinrichtung 31 befindet sich auf der Außenseite des Umfangsspanngliedes 42, das am in Fig. 1 unteren Ende auf seiner Außenseite eine Ringnut 60 enthält, innerhalb der mehrere Kugeln 61 mit einem Umfangsteil lagern. Im Ringraum 21 ist ferner ein das Umfangsspannglied 42 umgebender Stützring 62 mit einseitiger Schrägfläche 63 enthalten, der mittels der Druckfeder 32 mit seiner Schrägfläche 63 in axialer Längsrichtung, d.h. in Fig. 1 nach unten, gegen einen jeweils überstehenden Umfangsteil der Kugeln 61 gedrückt ist. Im Ringraum 21 , der zwischen dem Kopf 14 und der Außenseite des Umfangsspanngliedes 42 gebildet ist, ist ein etwa zylinderhülsenförmiger Kugelhalter 64 angeordnet, der in einer Axialrichtung, und zwar in Fig. 1 nach unten hin, an der Außenhülse 18 anliegt, und zwar an einer axialen Ringschulter, die im Übergangsbereich zum Hals 20 gebildet ist. Der Kugelhalter 64 enthält im in Fig. 1 oberen Bereich radial gerichtete Öffnungen 65, z. B. Bohrungen, in denen die Kugeln 61 gehalten sind. Dieser die Bohrungen 65 enthaltende Endbereich ist so abgeschrägt, daß er sich in Fig.1 nach oben hin verjüngt, wobei der Schrägungswinkel demjenigen der Schrägfläche 63 des Stützringes 62 zumindest im wesentlichen entspricht. Der Stützring 62 ist an diesem abgeschrägten, zugewandten Ende 87 des Kugelhalters 64 angeordnet, und zwar derart, daß der Stützring 62 mit seiner Schrägfläche 63 mit den an diesem Ende 87 radial zumindest geringfügig überstehenden Kugeln 61 in Berührung steht.

Wirkt von der Maschinenspindel, Werkzeugaufnahme od. dgl. und von der Aufnahme 11 her eine axial gerichtete Druckkraft bei axial abgestütztem Werkzeug 27, so werden die Kugeln 61 von der Flanke der Ringnut 60 des Umfangsspanngliedes 42 beaufschlagt. Je stärker die Kraft ist, umso stärker ist diese Beaufschlagung der Kugeln 61. Wird eine durch die Druckfeder 32 und die Schräge der Schrägfläche 63 des Stützringes 62 vorgegebene Gegenkraft überschritten, wandern die Kugeln 61 nach außen unter Verschiebung des Stützringes 62 gegen die Wirkung der Druckfeder 32. Dadurch wird für den Anschnitt z.B. eines Gewindebohrers ein gewünschter, einstellbarer Druck vorgegeben. Die Druckfeder 32 kann sodann bei der Relativverschiebung zwischen dem Kopf 14 und dem Gehäuse 12 einen Längenausgleich auf Druck bewirken.

Wird gegensinnig bei axial festgehaltenem Werkzeug 27 und Gehäuse 12 die Aufnahme 11 mit Kopf 14 axial in Fig. 1 nach oben gezogen, so werden die in der Ringnut 60 lagernden Kugeln 61 und über die Kugeln 61 der Kugelhalter 64 mitsamt dem an den Kugeln 61 anliegenden Stützring 62 mit dem Kopf 14 nach oben bewegt, wodurch die Druckfeder 32 ebenfalls auf Druck belastet ist und somit ein Längenausgleich zwischen dem Kopf 14 und dem Gehäuse 12 in Zugrichtung ermöglicht ist.

Der Werkzeughalter 9 ist ferner mit einer inneren Kühlmittelführung versehen, die besonders einfach gestaltet ist, was dadurch erreicht ist, daß die Längenausgleichseinrichtung 31 nach außen und in den äußeren Umfangsbereich der Zylinderwandung 15 verlagert ist. Im einzelnen weist das Schnellwechselfutter 10 ein zentrales inneres, der Kühlmittelführung dienendes Rohr 66 auf, das mit einem in Fig. 1 oberen Ende an der Aufnahme 11 befestigt ist und das sich von dort in die koaxiale Zylinderöffnung 16 und in eine zentrale Bohrung 67 des Gehäuses 12 hineinerstreckt. Die Bohrung 67 enthält einen an beiden axialen Enden mittels Dichtungsringen 68, 69 abgedichteten Ringraum 70 für das Kühlmittel, der somit innenseitig vom Rohr 66 und außen von der Bohrung 67 begrenzt ist. Der Ringraum 70 steht einerseits über mindestens einen Kanal 71 im Rohr 66, z.B. einer Bohrung in der Rohrwand, mit dem Inneren 72 des Rohres 66 in Verbindung. Andererseits ist der Ringraum 70 mit Kanälen 73, 74 im Gehäuse 12 verbunden, von denen der Kanal 73 z.B. radial und der Kanal 74 z.B. etwa achsparallel verläuft, wobei beide Kanäle 73, 74 im wesentlichen außerhalb der Mitte des Gehäuses 12 verlaufen. Der Kanal 74 führt bis zur koaxialen zylindrischen Öffnung 24 des Gehäuses 12.

Das freie, in Fig. 1 unten befindliche Ende des Rohres 66 ist geschlossen, z.B. durch einen Stopfen verschlossen. Es erstreckt sich durch eine zentrale axiale Bohrung 75 im Gehäuse 12 hindurch, die im Durchmesser größer ist und z.B. als Gewindebohrung ausgebildet ist. Das Ende des Rohres 66 erstreckt sich dort in einen Raum 76 hinein, der im Inneren eines etwa topfförmigen Abschlußgliedes 77 gebildet und nach unten abgeschlossen ist. Das Abschlußglied 77 ist mit einem Zapfen in die Bohrung 75 eingeschraubt und somit am Gehäuse 12 befestigt.

Das Abschlußglied 77 ist von einem Sperring 78 umgeben, der in der zylindrischen Öffnung 24 des Gehäuses 12 axial verschiebbar gehalten und in Umfangsrichtung gegenüber dem Gehäuse 12, insbesondere dessen Zylinderwandung 23, mittels eines Dichtungsringes 79 abgedichtet ist.

Das Abschlußglied 77 weist am axialen Ende zumindest einen radial auskragenden Vorsprung 80 auf, insbesondere eine Ringschulter, wobei der Vorsprung 80 als Anschlag für den Sperring 78 bei entnommenem Schnellwechseleinsatz 26 dient. Der Sperring 78 weist in Zuordnung dazu an einem Ende mindestens einen radial nach innen vorstehenden Anschlag 81 auf, z.B. eine Anschlagschulter. Wird der Schnellwechseleinsatz 26 entnommen und dadurch der Sperring 78 in Axialrichtung frei, der über eine stirnseitige Dichtung 82 dicht gegen die zugewandte Stirnseite des Schnellwechseleinsatzes angedrückt ist, so wird der Sperring 78 durch die Kraft einer ihn belastenden Feder 83 in Fig. 1 nach unten verschoben, bis der Anschlag 81, insbesondere die Anschlagschulter, am Vorsprung 80, insbesondere der Ringschulter, des Abschlußgliedes 77 anschlägt und dadurch ein Herausdrücken des Sperrringes 78 verhindert ist. Wird hiernach wieder ein Schnellwechseleinsatz 26 eingesetzt, so wird dadurch der Sperring 78 gegen die Wirkung der Feder 83 in die Position gemäß Fig. 2 eingeschoben.

Das bis zum Kanal 74 gelangende Kühlmittel wird durch Kanäle des Abschlußgliedes 77 und des Sperringes 78 in Fig. 1 nach unten geführt, so daß es durch die zentrale Öffnung im Schnellwechseleinsatz 26 und z.B. durch eine Öffnung im Werkzeug 27 hindurchgelangen kann. Hierzu weist der Sperrring 78 am in Fig. 1 oberen Ende mindestens einen Querkanal 84, z.B. eine Quernut, auf, die mit dem Kanal 74 in Verbindung steht. Der Querkanal 84 steht mit einem Ringraum 85 in Verbindung, der umfangsseitig zwischen dem Abschlußglied 77 und dem Sperring 78 gebildet ist.

Das Abschlußglied 77 weist im Bereich des freien, in Fig.1 unteren, Endes außenseitig mindestens eine Ausnehmung 86 oder zwei diametral gegenüberliegende Ausnehmungen dieser Art auf, wobei die Ausnehmung 86 mit dem Ringraum 85 zur Kühlmittelführung in Verbindung steht.

Das Kühlmittel wird z.B. in das Innere des Endes 13 der Aufnahme 11 eingeführt und gelangt in das Innere 72 des Rohres 66, von dem es über den mindestens einen Kanal 71 in den Ringraum 70 gelangt und von dort über die Kanäle 73, 74 zu dem mindestens einen Querkanal 84 am inneren Ende des Sperringes 78. Vom mindestens einen Querkanal 84 gelangt das Kühlmittel durch den Ringraum 85 und die mindestens eine Ausnehmung 86, wo es austritt und in eine innere zentrale Öffnung des Schnellwechseleinsatzes 26 eintritt.

Das Abschlußglied 77 und der Sperring 78 können so gestaltet sein, daß bei entnommenem Schnellwechseleinsatz 26 und weiter nach unten verschobenem Sperring 78 der Kühlmitteldurchlaß vom Ringraum 85 nach außen gesperrt ist, so daß bei entnommenem Schnellwechseleinsatz 26 kein Kühlmittel austreten kann.

Die beschriebene innere Kühlmittelführung mit Hilfe des in der Aufnahme 11 befestigten Rohres 26 ist besonders einfach und kostengünstig. Da bei einer Relativverschiebung zwischen dem Gehäuse 12 und dem Kopf 14 die Drucksäule des unter Druck stehenden Kühlmittels nicht mit bewegt wird, ist eine etwaige Verfälschung der Relativposition zwischen dem Kopf 14 und dem Gehäuse 12 ausgeschlossen. Ferner ist eine Druckentlastung erreicht.

Bei einem anderen, nicht gezeigten Ausführungsbeispiel ist der Werkzeughalter 9, insbesondere das Schnellwechselfutter 10, nicht mit der beschriebenen inneren Kühlmittelführung ausgestattet und dadurch besonders einfach. Je nach Gestaltung kann auch die Längenausgleichseinrichtung 31 entfallen.

Der Werkzeughalter 9, insbesondere das Schnellwechselfutter 10, ist kompakt, ermöglicht einen relativ kleinen Durchmesser, ist hinsichtlich der axialen Länge möglichst kurz und bei allem betriebssicher und nicht störanfällig, so daß auch bei eindringendem Schmutz dessen Funktion nicht behindert ist,und ist kostengünstig gestaltet und kostengünstig herstellbar, so daß es zu einer erheblichen Kostenreduzierung im Vergleich zu bekannten Schnellwechselfuttern führt.

Der im Inneren des Abschlußgliedes 77 gebildete Raum 76, in den sich das freie Ende des Rohres 66 hineinerstreckt und bei der Relativbewegung zwischen dem Kopf 14 und dem Gehäuse 12 mehr oder weniger tief eintaucht, ist nach außen entlüftet, wodurch verhindert ist, daß sich hier ein Druck aufbauen kann, der die Relativbewegung beeinträchtigen könnte. Zur Entlüftung dient im Gehäuse 12 ein Entlüftungskanal 29, der hier z. B. aus mindestens einem Radialkanal besteht, der nach außen bis zu einer Längsnut 38 geführt ist und somit über die Längsnut 38, ferner die Längsnut 37 und den Ringraum 21 entlüftet ist. Der Entlüftungskanal 29 steht im inneren Bereich des Gehäuses 12 mit einem zentralen Raum 30 in Verbindung, der seinerseits mit dem Raum 76 im Abschlußglied 77 komuniziert. Bei einem nicht gezeigten Ausführungsbeispiel kann dies z. B. durch eine oder mehrere Öffnungen im Rohr 66, insbesondere in der Rohrwandung, geschehen. Beim gezeigten Ausführungsbeispiel ist zwischen dem Abschlußglied 77 und dem sich in letzteres hineinerstreckenden freien Ende des Rohres 66 ein Ringraum 88 belassen, der die Verbindung zwischen dem Raum 76 und dem zentralen Raum 30 und Entlüftungskanal 29 herstellt, so daß in besonders einfacher Weise dadurch der Raum 76 entlüftet ist.

## Patentansprüche

1. Werkzeughalter, insbesondere Schnellwechselfutter, vorzugsweise zum Gewindeschneiden, Gewindeformen od.dgl., mit einer Aufnahme (11), die mit einem Ende (13) in einer Maschinenspindel, Werkzeugaufnahme od. dgl. aufnehmbar ist und am gegenüberliegenden Ende einen Kopf (14) aufweist, der eine koaxiale zylindrische Öffnung (16) enthält, in der undrehbar, jedoch in axialer Längsrichtung relativverschiebbar ein Gehäuse (12) aufgenommen und geführt ist, das eine koaxiale zylindrische Öffnung (24) enthält, in die ein Schnellwechseleinsatz (26) für ein Werkzeug (27) einsetzbar und damit kuppelbar ist, wobei zwischen dem Kopf (14) und dem Gehäuse (12) zumindest ein Mitnahmekörper (36), z.B. eine Kugel, angeordnet ist, der teilweise In einer zugeordneten Längsnut (37) des Kopfes (14) und teilweise in einer zugeordneten Längsnut (38) des Gehäuses (12) gehalten ist, der Drehmomentübertragung zwischen beiden dient und bei der Relativverschiebung zwischen Kopf (14) und Gehäuse (12) abrollen kann, wobei der mindestens eine Mitnahmekörper (36, 36', 36'', 36''') zwischen dem Kopf (14) und dem Gehäuse (12) hinsichtlich seiner Position in Längsrichtung führungsfrei angeordnet und von einem Ringteil umgeben ist, das den Kopf (14) auf dessen Außenseite (41) im Bereich des mindestens einen Mitnahmekörpers (36, 36', 36'', 36''') zumindest teilweise umfaßt und außen an dem vorstehenden Teil des mindestens einen Mitnahmekörpers anliegen kann,
**dadurch gekennzeichnet,**
daß das Ringteil als elastisches Umfangsspannglied (42) ausgebildet ist, welches den mindestens einen Mitnahmekörper (36, 36', 36'', 36''') von außen nach innen mit einer Andrückkraft beaufschlagt und elastisch federnd ausgebildet ist.

2. Werkzeughalter nach Anspruch 1,
**dadurch gekennzeichnet,**
daß der mindestens eine Mitnahmekörper (36, 36', 36'', 36''') in Querrichtung durch einen zugeordneten Längsschlitz (40) im Kopf (14) hindurchgreift und zumindest geringfügig über die Außenseite (41) des Kopfes (14) im Bereich des Längsschlitzes (40) vorsteht.

3. Werkzeughalter nach Anspruch 1 oder 2,
**dadurch gekennzeichnet,**
daß das Umfangsspannglied (42) aus einem Ring oder einer Zylinderhülse aus Metall gebildet ist.

4. Werkzeughalter nach einem der Ansprüche 1 bis 3,
**dadurch gekennzeichnet,**
daß das Umfangsspannglied (42) in axialer Längsrichtung an einer Stelle unterbrochen ist.

5. Werkzeughalter nach einem der Ansprüche 1 bis 4,
**dadurch gekennzeichnet,**
daß die mindestens eine Längsnut (38, 38', 38'', 38''') des Gehäuses (12) einen Trapezquerschnitt aufweist, der symmetrisch ist, wobei die Symmetrielinie (46) innerhalb einer Diametralebene (47) verläuft und somit durch die Mitte (8) des Gehäuses (12) hindurchläuft.

6. Werkzeughalter nach einem der Ansprüche 1 bis 5,
**dadurch gekennzeichnet,**
daß die mindestens eine Längsnut (37, 37', 37'', 37''') des Kopfes (14), insbesondere der mindestens eine Längsschlitz (40), zwei einander gegenüberliegende und zueinander etwa parallele Flanken (49, 50) aufweist, die jeweils innerhalb der Ebene einer Sekante (51, 52) verlaufen, welche in Radialabstand von der Mitte (8) und somit etwa parallel zu einer durch die Mitte (8) hindurchführenden Diametralebene (53) verläuft.

7. Werkzeughalter nach einem der Ansprüche 1 bis 6,
**dadurch gekennzeichnet,**
daß der Abstand zwischen den Flanken (49, 50) einer Längsnut (37, 37', 37'', 37''') des Kopfes (14), insbesondere eines Längsschlitzes (40), etwa dem Durchmesser der Mitnahmekugel entspricht oder zumindest geringfügig größer als letzterer ist.

8. Werkzeughalter nach einem der Ansprüche 1 bis 7,
**dadurch gekennzeichnet,**
daß vier über den Umfang verteilte Längsnuten (37, 37', 37'', 37''') im Kopf (14) und zugeordnete Längsnuten (38, 38', 38'', 38''') im Gehäuse (12) vorgesehen sind und je zusammenwirkendes Längsnutpaar (37, 38 bzw. 37', 38' bzw. 37'', 38'' bzw. 37''', 38''') ein Mitnahmekörper (36, 36', 36'', 36'''), insbesondere eine Mitnahmekugel, vorgesehen ist.

9. Werkzeughalter nach einem der Ansprüche 1 bis 8,
**dadurch gekennzeichnet,**
daß zwei Längsnutpaare (37, 38 und 37'', 38'') auf einem Umfangsbereich und zwei Längsnutpaare (37', 38' und 37''', 38''') auf einem anderen, in Umfangsrichtung versetzten Umfangsbereich jeweils einen Umfangswinkelabstand von etwa 60° voneinander haben und daß sich zwischen zwei so beabstandeten Längsnutpaaren (37, 38 und 37''', 38''' bzw. 37'', 38'' und 37', 38') jeweils ein längsnutfreier Umfangsbereich von etwa 120° Umfangswinkel befindet.

10. Werkzeughalter nach einem der Ansprüche 1 bis 9,
**dadurch gekennzeichnet,**
daß jeweils einem zusammenwirkenden Längsnutpaar (37, 38) ein anderes gleichartiges Längsnutpaar (37', 38') auf einer Diametralebene (47) diametral gegenüberliegt, wobei die beiden Diametralebenen (47, 48) unter einem Winkel von etwa 60° und einem Komplementärwinkel von etwa 120° zueinander verlaufen.

11. Werkzeughalter nach einem der Ansprüche 1 bis 10,
**dadurch gekennzeichnet**,
daß eine axiale Längenausgleichseinrichtung (31) auf Zug und Druck vorgesehen ist, die zugleich als Anschnittdruckverstärker wirksam ist und auf der Außenseite des Kopfes (14), insbesondere auf der Außenseite des Umfangsspanngliedes (42), angeordnet ist.

12. Werkzeughalter nach den Ansprüchen 1 und 11,
**dadurch gekennzeichnet,**
daß auf der Außenseite des Umfangsspanngliedes (42), insbesondere des Ringes oder der Zylinderhülse, eine Ringnut (60) vorgesehen ist, innerhalb der mehrere Kugeln (61) mit einem Umfangsteil lagern, und daß ein das Umfangsspannglied (42) umgebender Stützring (62) mit einseitiger Schrägfläche (63) vorgesehen ist, der mittels einer am Kopf (14) abgestützten Feder (32), insbesondere Druckfeder, mit seiner Schrägfläche (63) in axialer Längsrichtung gegen einen überstehenden Umfangsteil der Kugeln (61) gedrückt ist.

13. Werkzeughalter nach Anspruch 12,
**dadurch gekennzeichnet**,
daß das Gehäuse (12) von einer damit fest verbundenen Außenhülse (18) umgeben ist, die zwischen einem zylindrischen Hals (20) und dem Kopf (14), insbesondere der Außenseite des Umfangsspanngliedes (42), einen Ringraum (21) begrenzt, in dem die Längenausgleichseinrichtung (31) enthalten ist.

14. Werkzeughalter nach Anspruch 13,
**dadurch gekennzeichnet**,
daß im Ringraum (21) ein an der Außenhülse (18) in einer Axialrichtung anliegender Kugelhalter (64) angeordnet ist, der Öffnungen (65) enthält, in denen die Kugeln (61) gehalten sind, wobei der Stützring (62) an einem zugewandten Ende (87) des Kugelhalters (64) angeordnet ist und mit seiner Schrägfläche (63) mit den an diesem Ende (87) radial zumindest geringfügig überstehenden Kugeln (61) in Berührung steht.

## Claims

1. Tool holder, in particular quick release chuck, preferably for cutting threads, shaping threads or the like, with a mounting (11), which can be mounted at one end (13) in a machine shaft, tool mount or the like, and at the opposite end has a head (14) comprising a coaxial, cylindrical opening (16) in which a housing (12) is mounted and guided non-rotatably, but displaceably in axial longitudinal direction, which housing contains a coaxial cylindrical opening (24) into which a quick release insert (26) for a tool (27) can be inserted and coupled therewith, whereby between the head (14) and the housing (12) at least one driving body (36), e.g. a ball, is arranged which is partly held in an assigned longitudinal groove (37) of the head (14) and partly in an assigned longitudinal groove (38) of the housing (12), which serves to transfer torque between the two and can roll on the relative displacement between the head (14) and housing (12), whereby the at least one driving body (36, 36', 36'', 36''') is arranged guide-free between the head (14) and the housing (12) with respect to its position in longitudinal direction and is surrounded by an annular part which at least partly surrounds the head (14) on its outside (41) in the region of the at least one driving body (36, 36' 36'', 36''') and can lie outside on the projecting part of the at least one driving body,
**characterised in that**
the annular part is designed as an elastic peripheral prestressing element (42) which loads the at least one driving body (36, 36', 36'', 36''') from the outside inwards with a pressing force and is designed to be elastically resilient.

2. Tool holder according to claim 1,
**characterised in that**
the at least one driving body (36, 36', 36'', 36''') passes transversely through an assigned longitudinal slot (40) in the head (14) and projects at least slightly over the outside (41) of the head (14) in the region of the longitudinal slot (40).

3. Tool holder according to claim 1 or 2,
**characterised in that**
the peripheral prestressing element (42) is formed by a ring or a cylindrical sleeve made of metal.

4. Tool holder according to one of claims 1 to 3
**characterised in that**
the peripheral prestressing element (42) is interrupted in axial longitudinal direction at one point.

5. Tool holder according to one of claims 1 to 4
**characterised in that**
the at least one longitudinal groove (38, 38', 38'', 38''') of the housing (12) has a trapezoid cross section which is symmetrical, whereby the line of symmetry (46) is inside a diametrical plane (47) and thus runs through the centre (8) of the housing (12).

6. Tool holder according to one of claims 1 to 5,
**characterised in that** the at
least one longitudinal groove (37, 37', 37'', 37''') of the head (14), in particular the at least one longitudinal slot (40) has two opposite approximately parallel flanges (49, 50), which run inside the plane of a secant line (51, 52) which runs at a radial distance from the centre (8) and thus approximately parallel to a diametrical plane (53) leading through the centre (8).

7. Tool holder according to one of claims 1 to 6,
**characterised in that** the
distance between the Ranges (49, 50) of a longitudinal groove (37, 37', 37'', 37''') of the head (14) in particular a longitudinal slot (40) corresponds roughly to the diameter of the driving body or is at least slightly larger than the latter.

8. Tool holder according to one of claims 1 to 7,
**characterised in that** four
longitudinal grooves (37, 37', 37'', 37''') distributed over the periphery are provided in the head (14) and assigned longitudinal grooves (38, 38', 38'', 38''') are provided in the housing (12) and for each interacting longitudinal groove pair (37, 38 or 37', 38' or 37'', 38'' or 37''', 38''') a driving body (36, 36', 36'', 36'''), in particular a driving ball, is provided.

9. Tool holder according to one of claims 1 to 8,
**characterised in that**
two pairs of longitudinal grooves (37, 38 and 37'', 38'') on a peripheral region and two pairs of longitudinal grooves (37', 38' and 37''', 38''') on a different peripheral region offset in peripheral direction, are spaced apart peripherally by 60° and in that a longitudinal groove-free peripheral region of about 120° is positioned between two thus spaced longitudinal groove pairs (37, 38 and 37''', 38''' or 37'', 38'' and 37', 38').

10. Tool holder according to one of claims 1 to 9,
**characterised in that**
a different similar longitudinal groove pair (37', 38') lies diametrically opposite an interacting longitudinal groove pair (37, 38) on a diametrical plane (47), whereby the two diametrical planes (47, 48) are relative to one another at an angle of about 60° and a complementary angle of about 120°.

11. Tool holder according to one of claims 1 to 10,
**characterised in that** a
pull and push axial length adjustment device (31) is provided which is also effective as a starting cut booster and is arranged on the outside of the head (14), in particular on the outside of the peripheral prestressing element (42).

12. Tool holder according to claims 1 and 11,
**characterised in that**
on the outside of the peripheral prestressing element (42), in particular of the ring or the cylinder sleeve an annular groove (60) is provided, inside which several balls (61) are held with a peripheral part, and in that a support ring (62) surrounding the peripheral prestressing element (42) is provided with a one-sided angled surface (63) which by means of a spring (32) supported on the head (14, in particular a compression spring, is pressed with its angled surface (63) axially lengthwise against a projecting peripheral part of the balls (61).

13. Tool holder according to claim 12,
**characterised in that** the
housing (12) is surrounded by an outer sleeve (18) firmly secured thereto which delimits an annular chamber (21) between a cylindrical neck (20) and the head (14), in particular the outside of the peripheral prestressing element (42), in which annular chamber the length adjustment device (31) is contained.

14. Tool holder according to claim 13,
**characterised in that** in the
annular chamber (21) a ball holder (64) is arranged resting on the outer sleeve (18) in axial direction, which contains openings (65) in which the balls (61) are held, whereby the support ring (62) is arranged on a facing end (87) of the ball holder (64) and with its angled surface (63) is in contact with the balls (61) projecting radially at least slightly at this end (87).

## Revendications

1. Porte outil, en particulier mandrin à changement rapide, de préférence pour le filetage, le formage de filets ou d'autres opérations similaires, avec un fourreau (11) qui, au niveau d'une extrémité (13), peut être emmanché dans une broche de machine, un fourreau porte-outil ou un autre élément similaire et présente, à son extrémité opposée, une tête (14) qui présente une ouverture cylindrique coaxiale (16), dans laquelle est montée et guidée, sans pouvoir tourner, mais capable d'effectuer des déplacements relatifs dans le sens longitudinal axial, une enveloppe (12), qui présente une ouverture cylindrique coaxiale (24) dans laquelle on peut introduire un montage rapporté à changement rapide (26) pour un outil (27) et qui peut être accouplé avec celle-ci, au moins un corps d'entraînement (36), par exemple une bille, étant disposé entre la tête (14) et le boîtier (12), qui est maintenu en position partiellement dans une rainure longitudinale correspondante (37) de la tête (14) et partiellement dans une rainure longitudinale correspondante (38) du boîtier (12), qui sert à la transmission d'un couple de rotation entre les deux et qui dans le cas d'un déplacement relatif entre la tête (14) et le boîtier (12) peut rouler, le corps d'entraînement au moins au nombre de 1 (36, 36', 36'', 36''') étant disposé sans guidage, en ce qui concerne sa position dans le sens longitudinal, entre la tête (14) et le boîtier (12) et entouré par une partie annulaire, qui enserre la tête (14) et son côté extérieur (41) dans la zone du corps d'entraînement, au moins au nombre de 1 (36, 36', 36'', 36'''), au moins partiellement et qui extérieurement peut venir en contact d'appui avec la partie en saillie du corps d'entraînement, au moins au nombre de 1, caractérisé en ce que la partie annulaire est réalisée sous la forme d'un organe de bridage périphérique élastique (42), qui exerce sur le corps d'entraînement, au moins au nombre de 1 (36, 36', 36'', 36'''), de l'extérieur vers l'intérieur, une force d'application et est réalisée avec le comportement élastique d'un ressort.

2. Porte outil selon la revendication 1, caractérisé en ce que le corps d'entraînement, au moins au nombre de 1 (36, 36', 36'', 36'''), passe, dans le sens oblique, par une fente longitudinale (40) dans la tête (14) et fait saillie, au moins dans une proportion réduite, au-dessus du côté extérieur (41) de la tête (14) dans la zone de la fente longitudinale (40)

3. Porte outil selon la revendication 1 ou 2, caractérisé en ce que l'organe de bridage périphérique (42) se compose d'une bague ou d'une douille cylindrique métallique.

4. Porte outil selon l'une des revendications 1 à 3, caractérisé en ce que l'organe de bridage périphérique est interrompu en un endroit dans la direction longitudinale axiale.

5. Porte outil selon l'une des revendications 1 à 4, caractérisé en ce que la rainure longitudinale, au moins au nombre de 1 (38, 38', 38'', 38''') du boîtier (12) a une section transversale de forme trapézoïdale, qui est symétrique, la ligne de symétrie (46) passant à l'intérieur d'un plan diamétral (47) et traversant ainsi le centre (8) du boîtier (12).

6. Porte outil selon l'une des revendications 1 à 5, caractérisé en ce que la rainure longitudinale, au moins au nombre de 1 (37, 37', 37'', 37''') de la tête (14), notamment la fente longitudinale, au moins au nombre de 1, (40), présente deux flancs se faisant respectivement face et disposés sensiblement parallèlement l'un à l'autre (49, 50), qui passent respectivement à l'intérieur du plan d'une sécante (51, 52) qui, avec un écartement radial, s'étend du centre (8) et ainsi sensiblement parallèlement à un plan diamétral (53) passant par le centre (8).

7. Porte outil selon l'une des revendications 1 à 6, caractérisé en ce que l'intervalle entre les flancs (49, 50) d'une rainure longitudinale (37, 37', 37'''', 37''') de la tête (14), notamment d'une fente longitudinale (40), correspond sensiblement au diamètre de la bille d'entraînement ou est au moins très légèrement plus grand que ce dernier.

8. Porte outil selon l'une des revendications 1 à 7, caractérisé en ce que sont prévues quatre rainures longitudinales (37, 37', 37'', 37''') réparties sur la périphérie dans la tête (14) et des rainures longitudinales correspondantes (38, 38', 38'', 38''') dans le boîtier (12) et que pour chaque paire de rainures longitudinales opérant en association réciproque (37, 38 et 37', 38' et 37'', 38'' et 37''', 38''') il est prévu un corps d'entraînement (36, 36', 36'', 36'''), notamment une bille d'entraînement.

9. Porte outil selon l'une des revendications 1 à 8, caractérisé en ce que deux paires de rainures longitudinales (37, 38 et 37', 38') sur un secteur périphérique et deux paires de rainures longitudinales (37', 38' et 37''', 38''') sur un autre secteur périphérique décalé dans la direction de la périphérie, ont respectivement un écartement angulaire périphérique d'environ 60° entre elles et en ce qu'entre deux paires de rainures longitudinales ainsi écartées l'une de l'autre (37, 38 et 37''', 38''' et 37'', 38'' et 37', 38') se trouve respectivement un secteur périphérique ne présentant pas de rainure longitudinale, d'un angle périphérique d'environ 120°.

10. Porte outil selon l'une des revendications 1 à 9, caractérisé en ce que respectivement à une paire de rainures longitudinales opérant en interaction réciproque (37, 38) est diamétralement opposée à une autre paire de rainures longitudinales de même type (37', 38') sur un plan diamétral (47), les deux plans diamétraux (47, 48) étant disposés l'un par rapport à l'autre sous un angle d'environ 60° et un angle complémentaire d'environ 120°.

11. Porte outil selon l'une des revendications 1 à 10, caractérisé en ce qu'il est prévu un dispositif de compensation de longueur (31) axial, à la traction et à la compression, qui en même temps fait office d'amplificateur de pression d'attaque et qui est disposé sur le côté extérieur de la tête (14), en particulier sur le côté extérieur de l'organe de bridage périphérique (42).

12. Porte outil selon l'une des revendications 1 à 11, caractérisé en ce que sur le côté extérieur de l'organe de bridage périphérique (42), en particulier de la bague ou de la douille cylindrique, une rainure annulaire (60) est prévue, à l'intérieur de laquelle plusieurs billes (61) sont logées avec une partie périphérique et en ce qu'une bague d'appui (62), entourant l'organe de bridage périphérique (42), ayant une face oblique (63) sur un seul côté, est prévue, qui est mise en pression, par l'intermédiaire d'un ressort (32) prenant appui sur la tête (14), notamment un ressort de compression, au niveau de sa face oblique (63) dans le sens longitudinal axial, contre une partie périphérique en saillie des billes (61).

13. Porte outil selon la revendication 12, caractérisé en ce que le boîtier (12) est entouré par une douille extérieure (18) solidement assemblée avec celui-ci, qui délimite, entre une collerette cylindrique (20) et la tête (14), en particulier le côté extérieur de l'organe de bridage périphérique (42), un compartiment annulaire (21), dans lequel est logé le dispositif de compensation de longueur (31).

14. Porte outil selon la revendication 13, caractérisé en ce que dans le compartiment annulaire (21) est disposé un porte-billes (64) en contact avec la douille extérieure (18) dans une direction axiale, dans lequel les billes (61) sont maintenues, la bague d'appui (62) étant disposée à une extrémité faisant face (87) du porte-billes (64) et étant en contact, au niveau de sa face oblique (63) avec les billes (61) faisant saillie dans le plan radial, au moins dans une très faible proportion, au niveau de cette extrémité (87).
